# EUROPEAN PATENT APPLICATION

(11) **EP 2 530 512 A1**
(43) Date of publication of application: **05.12.2012**
(21) Application number: 11736847.2
(22) Date of filing: 13.01.2011
(51) Int. Cl.: G02F 1/133, G02F 1/13, G09G 3/20, G09G 3/34, G09G 3/36

(54) **DISPLAY DEVICE AND METHOD OF DISPLAY**

(30) Priority: 29.01.2010 JP 2010019678
(71) Applicant: JVC KENWOOD Corporation, Yokohama-shi, Kanagawa 221-0022 (JP)
(72) Inventor: YOSHIDA, Atsushi, Yokohama-shi Kanagawa 221- 0022 (JP); AIBA, Hideki, Yokohama-shi Kanagawa 221- 0022 (JP)
(74) Representative: Schmidbauer, Andreas Konrad
(86) International application number: PCT/JP2011/050401
(87) International publication number: WO 2011/093132

(57) **Abstract**

To suppress the occurrence of crosstalk and ensure sufficient luminance through an adequate light emission control of a backlight unit, a display device 110 includes a liquid crystal panel 158 with video display lines, a display controller 156 operable to have display data rendered on the liquid crystal panel, the display data including first field data of a video signal input, and second field data of the video signal as field data subsequent in temporal order and different in content from the first field data, a backlight unit 162 disposed behind the liquid crystal panel and provided with light sources adapted to emit light for irradiation to respective regions on the liquid crystal panel sectioned in accordance with a scan direction, and a backlight controller 164 operable to have the light sources transitioned between a light-out state and a light emitting state with a transition time shorter than a scan time of first field data and a scan time of second field data by the display controller.

## Description

### Technical Field

The present invention relates to a display device and a display method adapted to implement the light emission control of a backlight unit disposed behind a liquid crystal panel.

### Background Art

There are recent spotlighted stereoscopic video techniques displaying on a liquid crystal panel a pair ofright and left video data (video data for the right eye and video data for the left eye) with binocular disparity, to make a viewer perceive as if 3D objects were present. There have been proposed various techniques to implement such a stereoscopic video display that include, for instance, light polarizing filter systems (passive types) such as µ pol and X pol ®, and electronic shutter systems (negative types).

Stereoscopic video techniques using light polarizing filter systems utilize, for instance, two kinds of light polarizing filters different in polarization characteristic that are interlaced with each other (for every horizontal line) on a display screen of a liquid crystal panel. Then, a set of video data for the right eye is rendered on odd-numbered lines of the liquid crystal panel, where either kind of the light polarizing filters is disposed Also, a set of video data for the left eye is rendered on even-numbered lines of the liquid crystal panel, where the other kind of the light polarizing filters is disposed. Accordingly, a viewer can have visual contact through light polarizing eyeglasses with a right eye image rendered on every other one of the horizontal lines at the right eye and with a left eye image rendered on every other one of the horizontal lines at the left eye, thereby perceiving a stereoscopic picture with binocular disparity (for instance, Patent literature 1).

### Prior Art Literatures

### Patent literatures

Patent literature 1: Japanese Patent Application Laid-Open Publication No. 2004-157425

### Summary of the Invention

### Problems to be solved

The above-described stereoscopic video techniques using light polarizing filter systems are more excellent than the stereoscopic video techniques using electronic shutter systems in that they are free from the flickers of display images and the timings of image perception at the right and left eyes do not differ with each other. However, since a set of video data for the right eye or a set of video data for the left eye is rendered in a fixed manner on either of two regions (one is a set of odd-numbered lines and the other is a set of even-numbered lines in the above-described examples) that have different polarization characteristics on a liquid crystal panel, the resolution of perceivable image at either eye equals to approximately one half of a resolution of the entirety of the liquid crystal panel, thereby getting inferior to the stereoscopic video techniques using electronic shutter systems.

Therefore, there is a technique being newly studied, in which a set of video data for the right eye and a set of video data for the left eye are alternately switched to render on two regions different in polarization characteristic, and the right and left polarization characteristics of light polarizing eyeglasses for viewing these video data are switched in synchronization with the switching of video data to be rendered. This technique permits a viewer to perceive a stereoscopic picture without deteriorating the resolution.

Such a new technique needs not only the switching of display on a liquid crystal panel, but also the switching of the polarization characteristics of the light polarizing eyeglasses. Under such a situation, if the light emitting duration of a backlight unit irradiating the liquid crystal panel is simply lengthened to increase the luminance ofthe liquid crystal panel, crosstalk would occur between an arbitrary set of field data and an antecedent or subsequent set of field data different in content. Instead, to avoid such a situation, if the light emitting duration of the backlight unit is simply shortened, luminance would vary in the liquid crystal panel, or necessary luminance for display would not be obtained.

In view of such issues, the present invention has an object to provide a display device and a display method adapted to suppress the occurrence of crosstalk and ensure sufficient luminance through an adequate light emission control of a backlight unit. Solutions to the problem

To achieve the object described, according to the present invention, there is a display device comprising a liquid crystal panel configured with video display lines, a display controller configured to have display data rendered on the liquid crystal panel in a scan format, the display data comprising first field data of a video signal input, and second field data of the video signal as field data subsequent in temporal order and different in content from the first field data, a backlight unit disposed behind the liquid crystal panel, and configured with light sources adapted to emit light for irradiation to respective regions on the liquid crystal panel sectioned in accordance with a scan direction, and a backlight controller configured to have the light sources transitioned between a lights-out state and a light emitting state with a transition time shorter than a scan time of the first field data and a scan time of the second field data by the display controller.

The backlight controller may well be configured to determine a light emission starting timing at a light source of the light sources that corresponds to an initial line in the video display lines of the liquid crystal panel, in dependence on a display ending timing of field data previous by one in temporal order, and to determine a light emission ending timing at a light source of the light sources that corresponds to a final line in the video display lines of the liquid crystal panel, in dependence on a display starting timing of field data subsequent in temporal order. Further, the backlight controller may well be configured to have light emitting durations of the light sources equalized to each other.

The liquid crystal panel may well include a first display region with a prescribed polarization characteristic and a second display region different in polarization characteristic from the first display region, and further comprise a data acquiring interface configured to acquire a combination of video data for right eye and video data for left eye adapted to have a stereoscopic picture perceived with binocular disparity, a frame memory configured to hold the combination of video data for right eye and video data for left eye as acquired, and a display data producer configured to have the first field data obtained as a combination of video data corresponding to the first display region in the video data for right eye and video data corresponding to the second display region in the video data for left eye, and the second field data obtained as a combination of video data corresponding to the second display region in the video data for right eye and video data corresponding to the first display region in the video data for left eye, allocated alternately to produce the display data.

Of the first display region and the second display region, either may well comprise odd-numbered lines in the video display lines of the liquid crystal panel, the other comprising even-numbered lines in the video display lines.

The display data producer may well be adapted to produce display data consisting of one of the first field data and the second field data.

To achieve the object described, according to the present invention, there is a display method comprising having display data rendered on a liquid crystal panel in a scan format, the display data comprising first field data of a video signal input, and second field data of the video signal as field data subsequent in temporal order and different in content from the first field data, and controlling a backlight unit disposed behind the liquid crystal panel, and configured with light sources adapted to emit light for irradiation to respective regions on the liquid crystal panel sectioned in accordance with a scan direction, to have the light sources transitioned between a lights-out state and a light emitting state with a transition time shorter than a scan time of the display data.

The liquid crystal panel may well include a first display region with a prescribed polarization characteristic and a second display region different in polarization characteristic from the first display region, and the display method may well comprise acquiring a combination of video data for right eye and video data for left eye adapted to have a stereoscopic picture perceived with binocular disparity, and having the first field data obtained as a combination of video data in the video data for right eye corresponding to the first display region and video data in the video data for left eye corresponding to the second display region, and the second field data obtained as a combination of video data in the video data for right eye corresponding to the second display region and video data in the video data for left eye corresponding to the first display region, allocated alternately to produce the display data.

### Effects of the Invention

A display device of the present invention, through an adequate light emission control of a backlight unit, enables to suppress the occurrence of crosstalk between anterior and posterior field data different in content, secure a light emission duration at light sources in the backlight unit, and obtain sufficient luminance.

### Brief Description of the Drawings

Fig. 1 is an explanatory illustration showing general relations among constituent devices of a display system.
Fig. 2 is a functional block diagram showing general functions of a display device.
Fig. 3 is a functional block diagram for explaining specific operations of a display data producer.
Fig. 4 is a timing chart showing those signals constituting bases of operation of the display data producer.
Fig. 5 is an explanatory illustration for explaining a configuration of display screen of a liquid crystal panel.
Fig. 6 is an explanatory illustration showing relations between sets of display data rendered on the liquid crystal panel and images perceived through light polarizing eyeglasses.
Fig. 7 is an explanatory illustration showing an example of configuration of a backlight unit.
Fig. 8 is a combination of timing charts for explaining operations of a display controller, the light polarizing eyeglasses, and a backlight controller.
Fig. 9 is a combination of timing charts for explaining operations of the display controller, the light polarizing eyeglasses, and a backlight controller.
Fig. 10 is a chart of timings for explaining other operations of the display data producer.
Fig. 11 is a flowchart showing an overall flow of a display method.
Fig. 12 is an explanatory illustration for explaining a configuration of display screen in another example of liquid crystal panel.

### Embodiments of the Invention

There will be described below preferable embodiments of the present invention in detail with reference to the accompanying drawings. It is noted that the dimensions, materials, specific values, and others, shown in these embodiments are merely examples for easily understanding the present invention, and therefore do not restrict the invention unless otherwise noted. It is also noted that in the drawings, as well as in the specification, the elements substantially identical in function or configuration are designated by identical reference signs to omit redundant description, and those elements not directly associated with the present invention are non-depicted.

### (Display System)

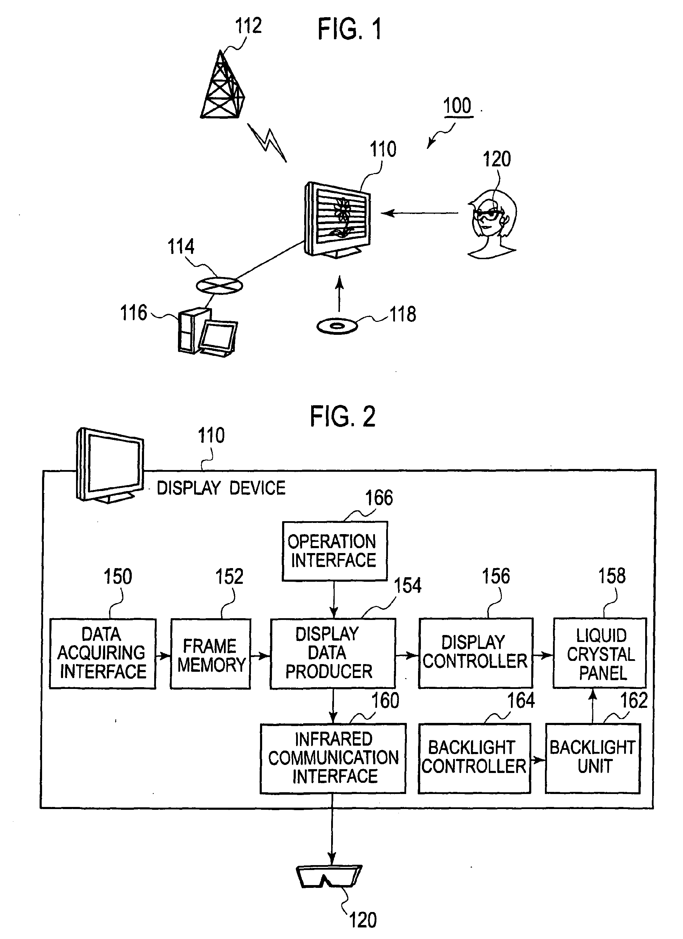

Fig. 1 is an explanatory illustration showing general relations between constituent devices of a display system 100. The display system 100 includes a display device 110 and light-polarizing eyeglasses 120. The display device 110 is adapted to acquire stereoscopic video data (video data for the right eye and video data for the left eye) for use to have stereoscopic pictures perceived with binocular disparity, for instance, from a broadcasting station 112 through broadcasting airwaves, or from a server device 116 through a communication network 114 such as the Internet, a LAN or dedicated line, or else from a storage medium 118 such as a DVD, BD, or USB memory. Then, the display device 110 renders the stereoscopic video data on a liquid crystal panel mounted thereon. The light-polarizing eyeglasses 120 have light-polarizing filters. A viewer wearing light-polarizing eyeglasses 120 has visual contact with video data for the right eye and video data for the left eye, both the video data being rendered on the display device 110, with the right eye and the left eye, respectively, thereby perceiving stereoscopic pictures with binocular disparity. There will be described below functional constituent elements of the display device 110 and details of display methods using the display device 110.

### (Display Device)

Fig. 2 is a functional block diagram showing general functions of the display device 110. As shown in Fig. 2, the display device 110 includes a data acquiring interface 150, a frame memory 152, a display data producer 154, a display controller 156, a liquid crystal panel 158, an infrared communication interface 160, a backlight unit 162, a backlight controller 164, and an operation interface 166.

The data acquiring interface 150 is adapted to acquire frames of stereoscopic video data as video picture signals composed of a set of video data for the right eye and a set of video data for the left eye, for instance, at a frame frequency of 30Hz. Here the term 'frame' is referred to as the images constituting a video picture. When a frame is divided into a set of odd-numbered lines and a set of even-numbered lines in an interlaced format, an image constructed from a combination of these lines is referred to as a field. Therefore, the data acquiring interface 150 is adapted to acquire images in the forms of video data for the right eye and video data for the left eye, 30 pictures every second. Further, the data acquiring interface 150 may be adapted to individually acquire a set of video data for the right eye and a set of video data for the left eye from different routes (circuit lines), or to acquire them as an integrated data set (for instance, data set with a side-by-side format) from a single route.

The frame memory 152 includes a RAM, a flush memory, an HDD to temporarily hold video data for the right eye and video data for the left eye, which are acquired at the data acquiring interface 150. It is noted that the HDD, which is accurately a device, is handled in an equivalent sense to the other storage media for the convenience of description.

The display data producer 154 is adapted to read a set of video data for the right eye and a set of video data for the left eye from the frame memory 152, and have a set of first field data and a set of second field data alternately allocated with a frequency (for instance, 60 Hz) twice as large as a frame frequency, thereby producing a set of display data. Here, the set of first field data is obtained as a combination of a set of video data corresponding to a first display region in the set of video data for the right eye and a set of video data corresponding to a second display region in the set of video data for the left eye. The set of second field data is obtained as a combination of a set of video data corresponding to the second display region in the set of video data for the right eye and a set of video data corresponding to the first display region in the set of video data for the left eye. Also, the set of second field data is a set of field data subsequent in temporal order. The liquid crystal panel 158 has a number of video lines from an initial line to a final line, such that one of the first display region and the second display region corresponds to a set of odd lines (a set of odd-numbered horizontal lines) of the video display lines on the liquid crystal panel 158, and the other corresponds to a set of even lines (a set of even numbered horizontal lines) of the video display lines.

In this respect, in the present embodiment, the display data producer 154 is adapted to repeat producing a set of first field data and a set of second field data twice, respectively. That is, two sets of first field data and two sets of second field data are produced within a frame cycle (one frame). Accordingly, the field frequency is equal to four times a flame frequency (to be 120 Hz for a frame frequency of 30 Hz). Such arrangement allows for rendering a set of display data on the liquid crystal panel 158 with a reduced scan time (as a period of time from a scan start to a scan end). In is noted that in a situation that a set of first field data is switched to a set of second field data and vise versa, the sets of field data will be referred to as "sets of field data different in content" to discriminate from a situation that a set of field data is repeated twice.

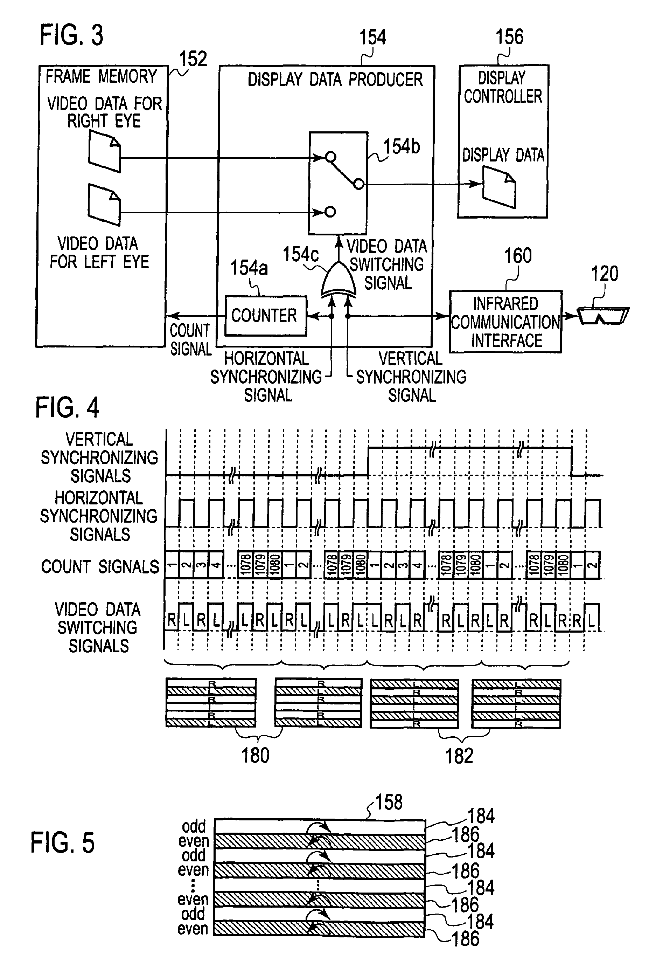

Fig. 3 is a functional block diagram for explaining specific operations at the display data producer 154, and Fig. 4 is a timing chart showing those signals constituting bases of operation at the display data producer 154. The display data producer 154 has a counter 154a adapted to repeat incrementing its count value at each of edges (rising edges and falling edges) of horizontal synchronizing signals (refer to Fig. 4) at a rate represented by "a field frequency (for instance, 120 Hz)/2 × total number of horizontal lines (for instance, 1080)". Then the counter 154a resets the count value each time when it has reached the total number of horizontal lines. The counter 154a is operable to output an incremented count value to the frame memory 152 through a count signal. Thus the counting from '1' to the total number of horizontal lines is repeated four times (corresponding to four sets of field data) within one cycle (one clock) of a vertical synchronizing signal (refer to Fig. 4).

In response to a count signal input from the counter 154a, the frame memory 152 is operable to output horizontal lines of a set of video data for the right eye and a set of video data for the left eye, the respective horizontal lines corresponding to a count value indicated by the count signal, to a switch 154b in the display data producer 154. Thus a set of video data for the right eye and a set of video data for the left eye are respectively output four times in a unit of horizontal line within a cycle of a vertical synchronizing signal.

The display data producer 154 has an exclusive OR circuit 154c, which is operable to calculate an XOR between a horizontal synchronizing signal and a vertical synchronizing signal, thereby generating a video data switching signal (refer to Fig. 4) for use at the switch 154b to determine which video data should be output. Accordingly, the video data switching signal appears as a signal identical to the horizontal synchronizing signal when the vertical synchronizing signal is in a negative state, while appearing as a logical inverted signal of the horizontal synchronizing signal when the vertical synchronizing signal is in a positive state.

The switch 154b is operable to sequentially input from the frame memory 152 horizontal lines corresponding to count values of video data for the right eye and video data for the left eye in parallel. Then the switch 154b is operated to output either horizontal line in accordance with a video data switching signal input from the exclusive OR circuit 154c. More specifically, the switch 154 is adapted to output a horizontal line of video data for the right eye when the video data switching signal is in a negative state and a horizontal line of video data for the left eye when the video data switching signal is in a positive state.

Accordingly, as illustrated in Fig. 4, during a negative state of a vertical synchronizing signal, a set of first field data 180 is produced twice consecutively. On the contrary, during a positive state of the vertical synchronizing signal, a set of second field data 182 is produced twice consecutively. Here the odd lines (first display regions) of each set of first field data 180 correspond to the odd lines of a set of video data for the right eye, and the even lines (second display regions) of each set of first field data 180 corresponding to the even lines of a set of video data for the left eye. Further, the odd lines of each set of second field data 182 correspond to the odd lines of the set of video data for the left eye, and the even lines of each set of second field data 182 corresponding to the even lines of the set of video data for the right eye.

In this case, video data for the right eye and video data for the left eye that are once held at the frame memory 152 are taken out in sequence, respectively, to produce a set of display data composed of sets of first field data 180 and sets of second field data 182. However, video data for the right eye and video data for the left eye that are acquired through the data acquiring interface 150 may be directly processed at the display data producer 154 to hold in a frame memory 152 that may be rearranged at a subsequent stage of the display data producer 154. In that case, a set of first field data 180 and a set of second field data 182 may be alternately held in this frame memory 152 at a field frequency of 60 Hz, and the display controller 156 may read each of the sets of field data from the frame memory 152 twice to raise the field period to 120 Hz.

With such an implementation, the frame memory 152 can significantly reduce a capacity of the frame memory 152 by holding simply either a set of first field data 180 or a set of second field data 182, which has a data volume of half the sum of a set of video data for the right eye and a set of video data for the left eye, instead of holding both of the set of video data for the right eye and the set of video data for the left eye.

The display controller 156 is adapted to have display data produced at the display data producer 154 rendered on the liquid crystal panel 158 sequentially in a scan format. Here the scan format (a progressive format, an interlaced format, etc.) is defined as a format for rendering data on the liquid crystal panel 158 in a unit of video display line (horizontal line) from the right to the left, and for repeating this in order from the top to the bottom to render a whole set of display data. In this embodiment, the display controller 156 employs a progressive format for rendering display data on the liquid crystal panel 158.

The liquid crystal panel 158 is configured with a liquid crystal composite sealed between two glass sheets to render display data on video display lines thereof with a control signal received from the display controller 156. Further, the liquid crystal panel 158 is configured with a display screen having two kinds of light polarizing filters different in polarization characteristic that are interlaced with each other (with an interval of one line). Here the phrase 'different in polarization characteristic' means that in use of light polarizing filters adapted for linear polarization, the polarization of one light polarizing filter is, for instance, perpendicular to that of the other polarizing filter. The phrase also means that in use of light polarizing filters adapted for circular polarization, one light polarizing filter has right-handed polarization and the other light polarizing filter has left-handed polarization.

Fig. 5 is an explanatory illustration for explaining a configuration of display screen of the liquid crystal panel 158. As in Fig. 5, a set of first filters with a certain polarization characteristic is formed on a part of display screen corresponding to odd-numbered (odd) lines 184 in the set of video display lines, constituting the first display region of the liquid crystal panel 158, and a set of second filters different in polarization characteristic from the set of first filters is formed on the other part of display screen corresponding to even-numbered (even) lines 186 in the set of video display lines, constituting the second display region of the liquid crystal panel 158.

More specifically, the filter formed on each odd line 184 in the set of video display lines is operable to give a phase difference of +λ (wavelength)/4 to incident image light as linearly polarized light along an axis of polarization perpendicular to the horizontal direction, thereby outputting this as right-handed circularly polarized light. Further, the filter formed on each even line 186 in the set of video display lines is operable to give a phase difference of -λ/4 to incident image light, thereby outputting this as left-handed circularly polarized light. Hence, the fluxes of image lights of a set of video data for the right eye or video data for the left eye, transmitted through the set of first filters on odd lines 184, are opposite in a rotational direction of polarization to the fluxes of image lights of a set of video data for the right eye or video data for the left eye, transmitted through the set of second filters on even lines 186, as illustrated in the arrows of Fig. 5. Further, there may also be a combination of a set of first filters and a set of second filters, either being formed with a phase difference of a proportion of λ/2 to output light linearly polarized light perpendicular to incident linearly polarized light, the other being made of simple glass or resin with substantially no phase difference, to make the polarization characteristic ofthe set of first filters different from that of the set of second filters.

The infrared communication interface 160 is configured to establish infrared communications with the light polarizing eyeglasses 120, and to transmit vertical synchronizing signals illustrated in Fig. 4 to the light polarizing eyeglasses 120, in order to transmit timings for switching polarization characteristics.

As described above, the display data producer 154 is adapted to produce sets of first field data 180 during a negative state of a vertical synchronizing signal, and sets of second field data 182 during a positive state of the vertical synchronizing signal. Each set of first field data 180 has odd lines allotted to a set of video data for the right eye and even lines allotted to a set of video data for the left eye. Each set of second field data 182 also has odd lines allotted to a set of video data for the left eye and even lines allotted to a set of video data for the right eye. Accordingly, during a negative state of a vertical synchronizing signal, a set of video data for the right eye is outputted through the set of first filters on a set of odd lines 184 in the liquid crystal panel 158, and a set of video data for the left eye is outputted through the set of second filters on a set of even lines 186 at the liquid crystal panel 158. On the contrary, during a positive state of the vertical synchronizing signal, a set of video data for the right eye is outputted through the set of second filters on the set of even lines 186, and a set of video data for the left eye is outputted through the set of first filters on the set of odd lines 184.

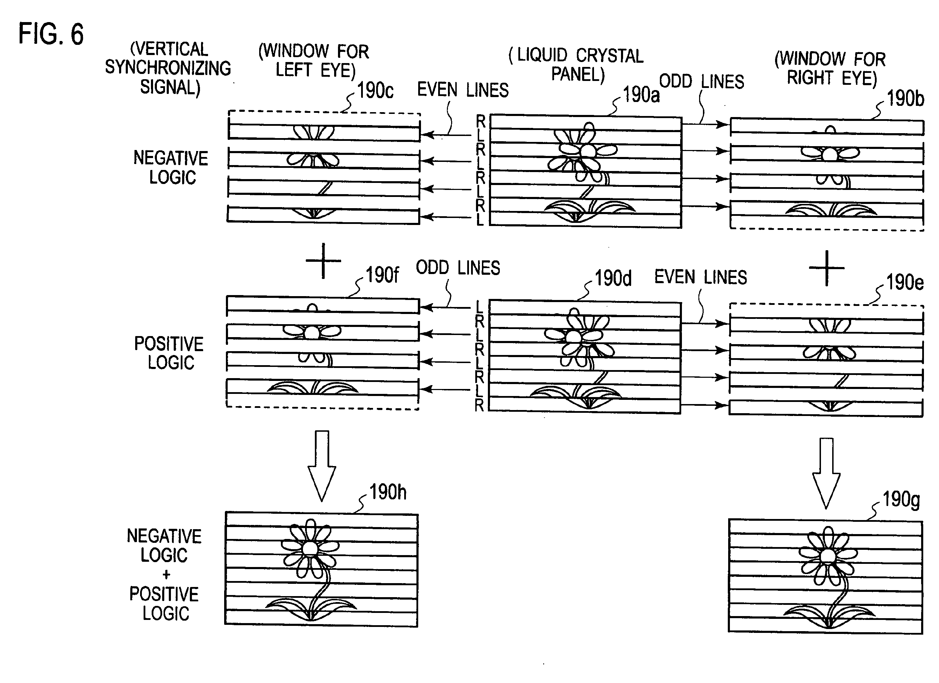

Through such durations, the light polarizing eyeglasses 120 must serve to have the viewer's right eye visually contact with video data simply for the right eye, while having the viewer's left eye visually contact with video data simply for the left eye. Therefore, the light polarizing eyeglasses 120 are configured to receive a vertical synchronizing signal from the infrared communication interface 160 to control a combination of a light polarizing filter in a right eye window of the light polarizing eyeglasses 120, which corresponds to the right eye of a viewer, and a light polarizing filter in a left eye window of the light polarizing eyeglasses 120, which corresponds to the left eye, in accordance with the vertical synchronizing signal. More specifically, during a negative state of a vertical synchronizing signal, the light polarizing filter in the right eye window is switched for transmitting fluxes of first linear-polarized light and for blocking out fluxes of second linear-polarized light perpendicular to the first linear-polarized light. Here the fluxes of first linear polarized light are obtained by giving a prescribed phase difference to fluxes of circularly polarized light outputted from the set of first filters on odd lines 184 in the set of video display lines of the liquid crystal panel 158, and the fluxes of second linear-polarized light are obtained by giving a prescribed phase difference to fluxes of circularly polarized light outputted from the set of second filters. Likewise, the light polarizing filter in the left eye window is switched for transmitting fluxes of second linear-polarized light and for blocking out fluxes of first linear-polarized light perpendicular to the second linear-polarized light. Here the fluxes of second linear-polarized light are obtained by giving a prescribed phase difference to fluxes of circularly polarized light outputted from the set of second filters on even lines 186 in the set of video display lines of the liquid crystal panel 158, and the fluxes of first linear-polarized light are obtained by giving a prescribed phase difference to fluxes of circularly polarized light outputted from the set of first filters. Then, during a positive state of the vertical synchronizing signal, the light polarizing filters in the right eye window and the left eye window are switched for exhibiting transmission characteristics opposite to those during the negative state, respectively. This leads the viewer to have visual contact with a set of video data for the right eye simply at the right eye, and with a set of video data for the left eye simply at the left eye, thereby perceiving a right stereoscopic picture. There will be specifically explained below how to provide a stereoscopic picture by combining the switching operations of the display of the liquid crystal panel 158 and the switching operations of the polarization characteristic ofthe light polarizing eyeglasses 120, with reference to Fig. 6.

Fig. 6 is an explanatory illustration showing relations between sets of display data rendered on the liquid crystal panel 158 and images perceived through the light polarizing eyeglasses 120. During a negative state of a vertical synchronizing signal, a set of display data 190a is rendered on the liquid crystal panel 158 in order. The set of display data 190a has a set of video data for the right eye (designated by R in the figure) allocated on odd lines and a set of video data for the left eye (designated by L in the figure) allocated on even lines. In this situation, since the right eye window of the light polarizing eyeglasses 120 is adapted to transmit fluxes of linearly polarized light of odd lines, a set of display data 190b is perceived at a viewer's right eye. Further, since the left eye window of the light polarizing eyeglasses 120 is adapted to transmit fluxes of linearly polarized light of even lines, a set of display data 190c is perceived at the viewer's left eye.

As the vertical synchronizing signal is switched to a positive state, a set of display data 190d is rendered on the liquid crystal panel 158 in order. The set of display data 190d has a set of video data for the left eye allocated on odd lines and a set of video data for the right eye allocated on even lines. In this situation, since the right eye window of the light polarizing eyeglasses 120 is adapted to transmit fluxes of linearly polarized light of even lines, a set of display data 190e is perceived at the viewer's right eye. Further, since the left eye window of the light polarizing eyeglasses 120 is adapted to transmit fluxes of linearly polarized light of odd lines, a set of display data 190f is perceived at the viewer's left eye. Accordingly, the viewer is able to perceive a set of display data 190g and a set of display data 190h at the right and left eyes, respectively, by synthesizing in the brain the sets of the display data rendered during the negative and positive states of the vertical synchronizing signal.

The set of display data 190g and the set of display data 190h have identical resolutions to the set of video data for the right eye and the set of video data for the left eye, which are acquired in the data acquiring interface 150, respectively. This means that the viewer is able to perceive a stereoscopic picture free from the deterioration of resolution.

Despite a light polarizing filter system, the above-described functional elements are operable to maintain resolutions, and avoid the difference between timings of image perception at the right and left eyes and flickers that might have appeared as a problem in application of an electronic shutter system. Thus this enables a viewer to enjoy a high image quality of video equivalent in resolution to an original video (a combination of video data for the right eye and video data for the left eye). Further, the viewer can reduce fatigues without feeling discomforts in stereoscopic pictures due to deviations in timing of perception between right and left images, even with camera subjects moving at high speeds.

The backlight unit 162 is disposed behind the liquid crystal panel 158 in a viewer's side and configured with light sources adapted to emit light for irradiation to respective regions sectioned in accordance with a scan direction on the liquid crystal panel 158, for instance, eight equal regions as sections of the total number of horizontal lines. The light sources may be composed of light emitting diodes (LEDs) or cold cathode fluorescent lamps (CCFLs). Here the scan direction is defined as a direction in which a scan is made, that is, a horizontal direction in this case.

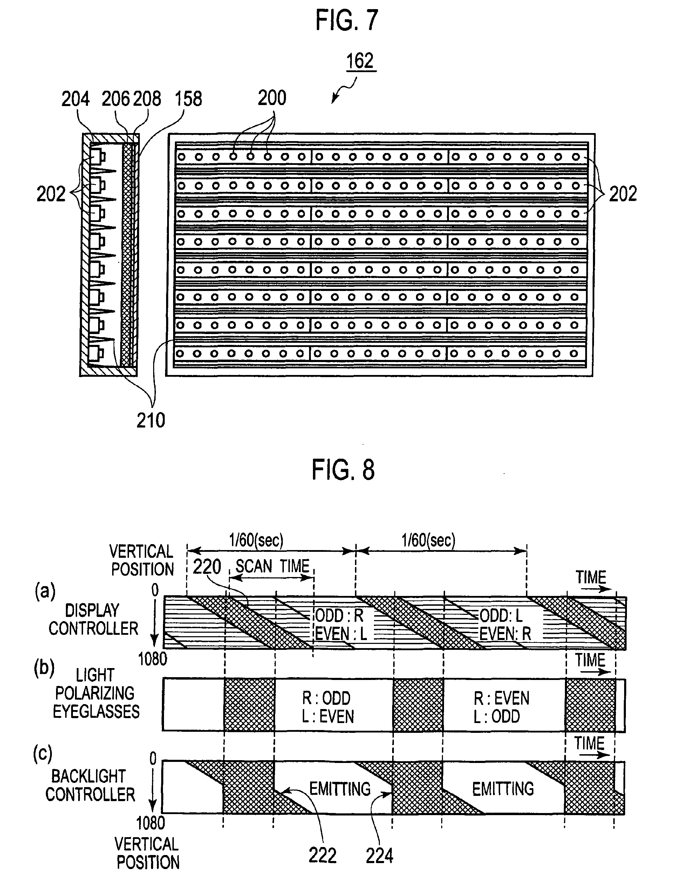

Fig. 7 is an explanatory illustration showing an example of configuration of backlight unit 162. Fig. 7 shows on the left hand a section in a lateral view and on the right hand a section in a front view. This backlight unit 162 includes an array of light sources 202, in each of which a set of light emitting diodes 200 (in this case, 24 pieces each) is aligned in juxtaposition. The light sources 202 are arrayed on a reflective sheet 204 at the back of the liquid crystal panel 158 with an even spacing in a scan direction. The light emitting diodes 200 in each light source 202 have a light emission starting timing and a light emission ending timing, whereby the respective light sources 202 individually undergo the emission control of the backlight controller 164 that will be described later on.

Further, between the array of light sources 202 and the liquid crystal panel 158, a diffusion sheet 206 and an optical sheet 208 are laminated for spreading fluxes of light emitted from the light sources 202. Between adjacent light sources 202, a light shielding partition 210 is formed with a triangular shape in section to restrict irradiation ranges of the light sources 202 to some extent. In this regard, the backlight unit 162 of the present embodiment is configured to permitfluxes of light emitted from light sources 202 arrayed to sectioned region to leak into other sectioned regions. This enables the emission luminance of light source 202 in each region to be suppressed.

However, when a light source 202 in the backlight unit 162 emits light at arbitrary region on the liquid crystal panel 158, if a subset of display data is rendered on regions other than the arbitrary region, a viewer would unintentionally have visual contact with such display data by flux of light from the light source 202, resulting in crosstalk. Therefore, with regard to the rendering of temporally sequenced sets of field data different in content, during the time when the rendering of a previous set of field data has not yet ended or the rendering of a subsequent set of field data has started, the backlight unit 162 should be kept from making any light source 202 emit light in position behind horizontal lines (as video display lines) serving to render an own set of field data.

The backlight controller 164 is adapted to control respective emission timings of the light sources 202 in accordance with the switching of display data to be rendered by the display controller 156.

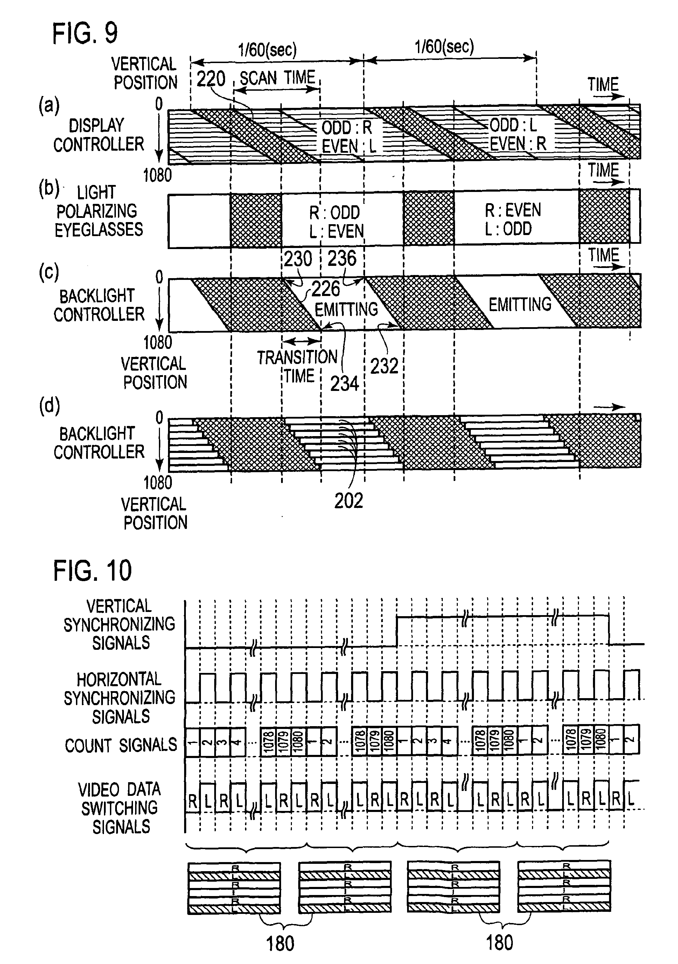

Fig. 8 and Fig. 9 are combinations of timing charts for explaining operations of the display controller 156, the light polarizing eyeglasses 120, and the backlight controller 164, respectively. There may be various means for use to implement the light emission control of the backlight unit 162. Here, a new means for emission control illustrated in Fig. 9 is proposed on the basis of the means illustrated in Fig. 8.

Fig. 8(a) shows timings for the display controller 156 to render sets of display data. Here the longitudinal axis denotes vertical positions (locations in the vertical direction) of horizontal lines and the horizontal axis denotes times. As illustrated in Fig. 8(a), the display controller 156 is adapted to have a sequence of two sets of first field data rendered on the liquid crystal panel 158 for 1/60 second, each involving a set of video data for the right eye allocated on the odd lines and a set of video data for the left eye allocated on the even lines. Continuously, the display controller 156 has a sequence of two sets of second field data rendered thereon for 1/60 second, each involving a set of video data for the left eye allocated on the odd lines and a set of video data for the right eye allocated on the even lines. Then, the display controller 156 has paired sequences of sets of field data alternately rendered in a repeating manner.

In this example, a frequency of field data is raised to a double (120 Hz) to have a set of field data rendered twice continuously, whereby the scan time of the set of field data can be shortened by half, and the time to be spent for displaying any single picture can be reduced from 1/60 second to 1/120 second. Namely, in Fig. 8(a), an inclination 220 is increased relative to the case of a field frequency of 60 Hz and gets up nearer to a vertical. The inclination 220 represents the display transition of the display data rendered in a progressive format. This allows not simply for the securing of the hold time of display data, but also for the securing of an extended lighting time of backlight unit 162 with avoiding crosstalk.

Further, as indicated by cross hatchings in Fig. 8(a), the display timings of display data involve transition periods to be spent to update signals in accordance with response characteristics of materials in a display device of the liquid crystal panel 158. During the transitions periods, the display controller 156 has the liquid crystal panel 158 displaying a black color (as a result of light shielding at the liquid crystal side).

Fig. 8(b) shows timings for the light polarizing eyeglasses 120 to open or close electronic shutters along the horizontal axis indicating times. The light polarizing eyeglasses 120 are adapted not simply to switch the polarization characteristics described above, but also to implement the open-close control of electronic shutters to avoid having simultaneous visual contacts with sets of field data different in content. Fig. 8(b) has hatched regions each representing close states of the electronic shutters and blank regions each representing open states thereof In Fig. 8(b), the legends written in the blank regions indicate the polarization characteristics in the open states of the electronic shutters. For instance, the light polarizing eyeglasses 120 are not operable to promptly open the electronic shutters even in a state having started rendering a set of first field data, but operable to open the electronic shutters in a state having ended rendering the final line (the lowermost line in vertical position) of a previous set of second field data different in content. Moreover, the light polarizing eyeglasses 120 are operable to close the electronic shutters before entering a state to start rendering the initial line (the uppermost line in vertical position) of a subsequent set of second field data different in content. Further, the light polarizing eyeglasses 120 are operable to determine the timings to open or close the electronic shutters in consideration of an update of the polarization characteristics at the right eye window and the left eye window and the transition periods in association with the opening or closing of the light polarizing eyeglasses 120.

Fig. 8(c) shows timings for the backlight controller 164 to have the backlight unit 162 emit light. Here the longitudinal axis denotes vertical positions at the liquid crystal panel 158 and the horizontal axis denotes times. In Fig. 8(c), the blank regions represent light emitting states of the light sources 202 and the hatched regions represents lights-out states of the light sources 202.

As mentioned above, a sequence of sets of first field data and a sequence of sets of second field data have different video data to be perceived by a viewer's right and left eyes. If the backlight unit 162 has leaked light when rendering first field data in the situation that the liquid crystal panel 158 has not yet ended rendering the final line of a set of second field data that is previous to the first field data or the situation that the display panel 158 has already started rendering the initial line of a set of second field data that is subsequent thereto, crosstalk occurs between field data Therefore, to avoid the occurrence of crosstalk, it is desirable to suspend the emission of light at the backlight unit 162 during each period for the transition between a set of first field data and a set of second field data.

Here, if the backlight unit 162 is operable to have light sources 202 emit light simply during the period when the electronic shutters of the light polarizing eyeglasses 120 are open in the situation that the backlight unit 162 avoids light emission during the transition period between a set of first field data and a set of second field data and the liquid crystal panel 158 renders sets of first field data, a pattern of emission timings as illustrated in Fig. 8(c) is obtained.

However, if the backlight unit 162 is operated to have light sources 202 emit light in accordance with the pattern of emission timing in Fig. 8(c), the distance of light sources 222 for rendering a set of first field data become close to the final line of a previous set of second field data different in content, or the distance of light sources 224 for rendering a set of first field data become close to the initial line of a subsequent set of second field data. Hence, the backlight unit 162 would have to contract the whole light emission time to avoid crosstalk due to leaked light. As a result, it would have reduced the light emission time at respective light sources 202 corresponding to the initial line and the final line at the liquid crystal panel 158, thereby deteriorating luminance as a whole.

Further, if the backlight unit 162 is operated to have light sources 202 emit light in accordance with the pattern of emission timing in Fig. 8(c), the light emission times at respective light sources 202 are different in dependence on their positions in the vertical direction, resulting in a variation of luminance in the liquid crystal panel 158.

Therefore, the backlight controller 164 is adapted to control the light sources 202 as illustrated in Fig. 9. Figs. 9 (a) and (b) show the patterns of timing substantially equivalent to those in Figs. 8 (a) and (b), respectively. Referring to Fig. 9(c), the backlight controller 164 is adapted to have the light sources 202 start light emission in sequence, for instance, from the light source 202 corresponding to the initial line on the liquid crystal panel 158 to the light source 202 corresponding to the final line thereon, within a transition time (a period of transition from lights-out states to light emitting states, or from light emitting states to lights-out states at all the light sources 202) shorter than a scan period of a set of display data (as a combination of a set of first field data and a set of second field data) at the display controller 156. Namely, in Fig. 9(c), an inclination 226 becomes further increased and nearer to a vertical in comparison with an inclination 220 representing the display transition of a set of display data in a progressive format. There will be descried below a specific timing for emission control

At first, the backlight controller 164 is operable to determine a light emission starting timing 230 of a light source 202 corresponding to the initial line in the video display lines on the liquid crystal panel 158 on the basis of a display ending timing of a set of field data previous by one in temporal order and different in content, in order to accommodate crosstalk with the set of field data to a prescribed permissible value (for instance, 7 %) or less. Further the backlight controller 164 is operable to determine a light emission ending timing 232 of a light source 202 corresponding to the final line in the video display lines on the liquid crystal panel 158 on the basis of a display starting timing of a set of field data subsequent in temporal order and different in content, in order to accommodate crosstak with the set of field data to a prescribed permissible value or less. Here the backlight controller 164 is adapted to operate in consideration of the display starting timings and display ending timings of field data, not simply for display at the initial line and the final line, but also for display at all horizontal lines.

Next, the backlight controller 164 is operable to determine a light emission starting timing 234 of a light source 202 corresponding to the final line and a light emission ending timing 236 of a light source 202 corresponding to the initial line on the basis of a display starting timing at the final line of the liquid crystal panel 158 and a display ending timing at the initial line thereof, in order to have a corresponding light source 202 emit light at least at the display starting timing at the final line and the display ending timing at the initial line, respectively.

The backlight controller 164 is also operable to have other light sources 202 emit light during a period of time from an arbitrary timing on a straight line interconnecting the light emission starting timing 230 and the light emission starting timing 234 to a corresponding timing on a straight line interconnecting the light emission ending timing 232 and the light emission ending timing 236. As shown in Fig. 9(c), the pattern of emission timing is a substantially parallelogram shape. This means that the respective light sources 202 have an equalized duration to emit light to the liquid crystal panel 158. In Fig. 9(c), the light emission duration is about 1/120 second. However, it can be adjusted, for example, within a range of 1/240 to 1/120 second to provide a margin for device properties or ambient temperature variations.

Further, as described above, the backlight unit 162 is configured with the array of eight light sources 202 corresponding to sectioned regions (eight equal parts in this case) aligned to the scan direction. Hence, the backlight controller 164 is also due to implement the independent emission control of each eight light source 202. Fig. 9(d) shows such an independent emission control of the respective light sources 202 corresponding to the above-noted regions. In this case, the respective light sources 202 also have an equalized light emission duration.

In this way, the backlight unit 162 is adequately controlled in light emission to suppress the occurrence of crosstalk between a previous and a subsequent set of field data different in content, secure a light emission duration at every light source 202 of the backlight unit 162, and obtain sufficient luminance. Further, since the light emission duration is equalized at respective light sources 202, the luminance of the liquid crystal panel 158 can be evened out and a viewer can enjoy a high image quality of video equivalent in resolution to an original video.

Further, as will be seen from Fig. 9(c) compared with Fig. 8(c), the total quantity (area) of light emission can be suppressed with the securing of light emission duration at each light source 220, thereby allowing for enhancing the image quality and allowing for reducing power consumption.

Further, with a sufficient light emission duration secured at the backlight unit 162, ensured luminance enables visual contacts without the occurrences of crosstalk, even in a case that liquid crystal devices used for the liquid crystal panel 158 or the light polarizing eyeglasses 120 have a slow response speed. Further, in a case that such liquid crystal devices have a high response speed, it is possible to provide stereoscopic pictures with significant higher levels of luminance than ever.

The foregoing description has been addressed to an example alternately rendering first field data and second field data. However, the display data producer 154 may be adapted to accept viewer's operation inputs through the operation interface 166, which is configured with several switches such as pushbutton switches and arrow keys, to produce a set of display data from one of sets of first field data or sets of second field data.

Fig. 10 is a chart of timings for explaining other operations of the display data producer 154. In the above-described example, the display data producer 154 generates a video switching signal by use of an XOR between a horizontal synchronizing signal and a vertical synchronizing signal. However, a horizontal synchronizing signal itself can be used as a video data switching signal, or else can be inverted to provide a video data switching signal, to fix a set of display data outputted from the display data producer 154 to a set of first field data 180 or a set of second field data 182.

In the above-described display device 110 configured to switch field data, the polarization characteristic of the light polarization eyeglasses 120 is switched. Thus, in comparison with light polarizing eyeglasses that need no switching, its structure would be complicated and its cost would be high. In this case, the display device 110 dares not switch between a set of first field data and a set of second field data. Instead, either one of a set of first field data and a set of second field data is fixedly rendered on the liquid crystal pane 158. Therefore, even in a situation that it is not prepared light polarizing eyeglasses that lack the switching function of polarization characteristics, a viewer can enjoy stereoscopic pictures with the light polarizing eyeglasses. Further, even in a situation that light polarizing eyeglasses 120 have a function of switching polarization characteristics, a viewer can enjoy stereoscopic pictures of fixed field data by fixing field data and transmitting signals for fixing light polarizing filters at both of the right eye window and the left eye window from the display device 100.

In the above situations, since the liquid crystal panel 158 does not need any transition period of display data, the backlight unit 162 can continue emitting light without extinction. Thus display data can be rendered with high levels of luminance. Further, since the polarization characteristics of light polarizing eyeglasses can also be fixed at the right and the left, a viewer can have visual contact with display data with non expensive passive type light polarizing eyeglasses. Thus, for instance, a number of viewers can have visual contact with display data in a low cost way. Further, a viewer can select suitable visual contacts according to the situations: first, when a viewer tries to have visual contact with display data in high resolution, the above-described technique of switching field data can be used; second, in addition to the first situation, when a number of viewers tries to have visual contact with display data, the above-described technique of fixing field data can be used.

### (Display Method)

Description is now made of a display method using the display device 110 to produce a set of display data.

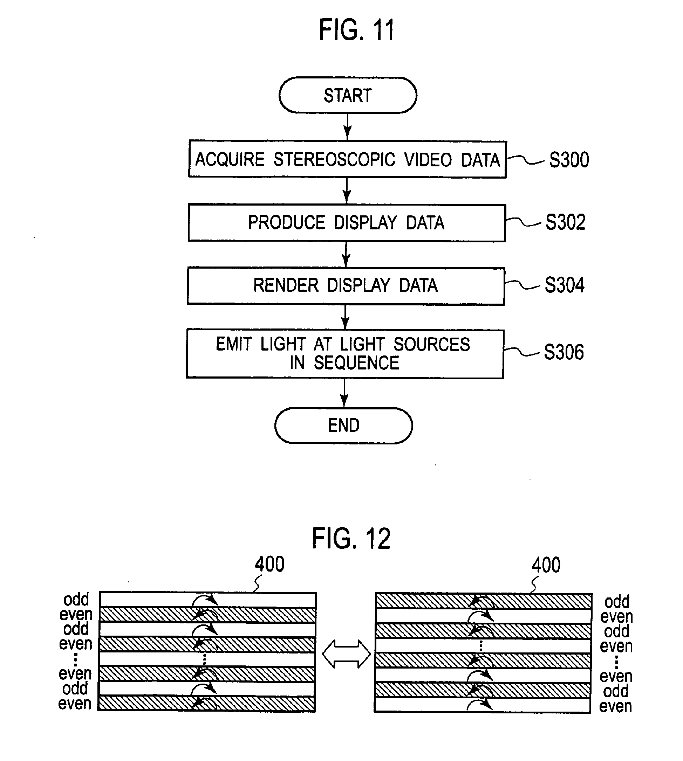

Fig. 11 is a flowchart showing an overall flow of the display method. At a step S300, the data acquiring interface 150 of the display device 110 operates to acquire a set of stereoscopic video data (a combination of a set of video data for the right eye and a set of video data for the left eye). At a step S302, the display data producer 154 operates to have a set of first field data and a set of second field data alternately allocated to produce a set of display data. Here the set of first data is obtained as a combination of a set of odd lines out of the set of video data for the right eye (as a set of video data corresponding to a first display region) and a set of even lines out of the set of video data for the left eye (as a set of video data corresponding to a second display region). And the set of second field data is obtained as a combination of a set of even lines out of the set of video data for the right eye and a set of odd lines out of the set of video data for the left eye.

Then, at a step S304, the display controller 156 operates to have the liquid crystal panel 158 sequentially render a set of display data produced by the display data producer 154 in a scan format. At a step S306, the backlight controller 164 operates to have the array of light sources 202 sequentially start emitting light within a transition period shorter than a scan period of display data, thereby transiting all the light sources 202 from a lights-out state to a light emitting state. At this time, the backlight controller 164 operates to determine light emission starting timings of light sources 202 in dependence on display ending timings of display data in a field that is previous by one in temporal order and different in content, and to determine light emission ending timings of light sources 202 in dependence on display starting timings of display data in a field that is subsequent in temporal order and different in content. Further, the backlight controller 164 operates to equalize light emission durations of the light sources 202.

The above display method enables an adequate emission control of the backlight unit 162, thereby allowing for suppressing the occurrence of crosstalk between previous and subsequent sets of field data different in content, allowing for securing light emission durations of the light sources 202 on the backlight unit 162, and allowing for obtaining sufficient luminance.

### (Other Embodiments)

The above-described embodiment uses an array of light polarizing filters different in polarization characteristics fixed on the liquid crystal panel 158, and dynamically switches the polarization characteristics of the light polarizing filters provided on the right eye window and the left eye window of the light polarizing eyeglasses 120. However, another embodiment may use light polarizing filters fixed on the light polarizing eyeglasses 120, and dynamically switch the polarization characteristics of arrays of light polarizing filters provided on odd lines (as video data corresponding to the first display regions) of the liquid crystal panel 158 and even lines (as video data corresponding to the second display regions).

Fig. 12 is an explanatory illustration for explaining a configuration of display screen in another example of liquid crystal panel. In this embodiment, an array of regions corresponding to odd lines and an array of regions corresponding to even lines are alternately switched on a display screen of a liquid crystal panel 104 in accordance with switching timings of field data with reference to a vertical synchronizing signal. Accordingly, like the above-described technique of switching polarization characteristics at the light polarizing eyeglasses 120, it can maintain resolutions and avoid flickers and the difference between timings of image perception at the right and left eyes. Thus this enables a viewer to enjoy a high image quality of video equivalent in resolution to an original video. Further, the viewer can reduce fatigues, without feeling discomforts due to stereoscopic pictures due to deviations in timing of perception between right and left images in situations of camera subjects moving at high speeds.

Further, in the above-described embodiment, the data acquiring interface 150 operates to acquire a combination of a set of video data for the right eye and a set of video data for the left eye. Instead, the data acquiring interface 150 may acquire a combination of a set of planer video data and a set of data for interpolation of the set ofplaner video data in temporal direction to output the combination as a set of field data. In such configuration, the set of interpolation data allows for displaying motions of camera subjects into details, thereby permitting the smooth transition of the camera subjects, even when the camera subjects move at high speeds, and allowing for enhancing image quality.

Although there have been described preferred embodiments of the present invention with reference to the accompanying drawings, it will be seen that the present invention is not restricted by such embodiments, as a matter of course. It is apparent that one of ordinary skill in the art may think of various changes or modifications within the scope of claims, which also should belong to a technical concept of the present invention.

It is noted that respective steps of the display method herein do not always need to be implemented in temporal order in the flowchart, and may well be implemented in parallel or in subroutine, in part or as a whole.

### Industrial Applicability

The present invention is applicable to display devices and display methods adapted to implement the light emission control of a backlight unit disposed behind a liquid crystal panel.

### Reference Signs

- 110: display device
- 120: light polarizing eyeglasses
- 150: data acquiring interface
- 152: frame memory
- 154: display data producer
- 156: display controller
- 158, 400: liquid crystal panel
- 160: infrared communication interface
- 162: backlight unit
- 164: backlight controller
- 166: operation interface

## Claims

1. A display device comprising:
a liquid crystal panel configured with video display lines;
a display controller configured to have display data rendered on the liquid crystal panel in a scan format, the display data comprising first field data of a video signal input, and second field data of the video signal as field data subsequent in temporal order and different in content from the first field data;
a backlight unit disposed behind the liquid crystal panel and configured with light sources adapted to emit light for irradiation to respective regions on the liquid crystal panel sectioned in accordance with a scan direction; and
a backlight controller configured to have the light sources transitioned between a lights-out state and a light emitting state with a transition time shorter than a scan time of the first field data and a scan time of the second field data by the display controller.

2. The display device according to claim 1, wherein the backlight controller is configured to determine a light emission starting timing at a light source of the light sources that corresponds to an initial line in the video display lines of the liquid crystal panel, in dependence on a display ending timing of field data previous by one in temporal order, and to determine a light emission ending timing at a light source of the light sources that corresponds to a final line in the video display lines of the liquid crystal panel, in dependence on a display starting timing of field data subsequent in temporal order.

3. The display device according to claim 1 or 2, wherein the backlight controller is configured to have light emitting durations of the light sources equalized to each other.

4. The display device according to any one of claims 1 to 3, wherein the liquid crystal panel includes a first display region with a prescribed polarization characteristic and a second display region different in polarization characteristic from the first display region, and the device further comprises:
a data acquiring interface configured to acquire a combination of video data for right eye and video data for left eye adapted to have a stereoscopic picture perceived with binocular disparity;
a frame memory configured to hold the combination of video data for right eye and video data for left eye as acquired; and
a display data producer configured to have the first field data obtained as a combination of video data corresponding to the first display region in the video data for right eye and video data corresponding to the second display region in the video data for left eye, and the second field data obtained as a combination of video data corresponding to the second display region in the video data for right eye and video data corresponding to the first display region in the video data for left eye, allocated alternately to produce the display data.

5. The display device according to claim 4, wherein the first display region and the second display region, either comprises odd-numbered lines in the video display lines of the liquid crystal panel, the other comprising even-numbered lines in the video display lines.

6. The display device according to claim 4 or 5, wherein the display data producer is adapted to produce a display data consisting of one of the first field data and the second field data.

7. A display method comprising:
having display data rendered on a liquid crystal panel in a scan format, the display data comprising first field data of a video signal input, and second field data of the video signal as field data subsequent in temporal order and different in content from the first field data; and
controlling a backlight unit disposed behind the liquid crystal panel and configured with light sources adapted to emit light for irradiation to respective regions on the liquid crystal panel sectioned in accordance with a scan direction, to have the light sources transitioned between a lights-out state and a light emitting state with a transition time shorter than a scan time of the display data.

8. The display method according to claim 7, wherein the liquid crystal panel includes a first display region with a prescribed polarization characteristic and a second display region different in polarization characteristic from the first display region, the method further comprises:
acquiring a combination of video data for right eye and video data for left eye adapted to have a stereoscopic picture perceived with binocular disparity; and
having the first field data obtained as a combination ofvideo data corresponding to the first display region in the video data for right eye and video data corresponding to the second display region in the video data for left eye, and the second field data obtained as a combination of video data corresponding to the second display region in the video data for right eye and video data corresponding to the first display region in the video data for left eye, allocated alternately to produce the display data.
